# EUROPÄISCHE PATENTSCHRIFT

(11) **EP 2 422 598 B1**
(45) Veröffentlichungstag und Bekanntmachung des Hinweises auf die Patenterteilung: **31.12.2014**
(21) Anmeldenummer: 10176853.9
(22) Anmeldetag: 15.09.2010
(51) Int. Cl.: A01B 63/22, A01B 63/00

(54) **Bodenbearbeitungskombination**
Soil treatment compound
Combinaison de traitement du sol

(30) Priorität: 30.08.2010 DE 102010035873
(43) Veröffentlichungstag der Anmeldung: 29.02.2012
(73) Patentinhaber: Horsch Maschinen GmbH, 92421 Schwandorf (DE)
(72) Erfinder: Pirkenseer, Michael, 92287 Schmidmühlen (DE); Bauer, Richard, 84097 Herrngiersdorf (DE); Bultmannn, Hubertus, 92421 Schwandorf (DE); Horsch, Michael, 92421 Schwandorf (DE)
(74) Vertreter: Benninger, Johannes

(56) Entgegenhaltungen:
- EP-A2- 1 201 470
- WO-A1-86/04769
- US-A- 3 708 018
- US-A- 4 108 249
- US-A- 4 326 594

## Beschreibung

Die Erfindung betrifft eine Bodenbearbeitungskombination mit den Merkmalen des unabhängigen Anspruchs 1.

Es gibt einen aktuellen Trend, bei landwirtschaftlichen Geräten immer weniger Geräte bzw. effektiv wirksame Lasten am Dreipunkt-Kraftheber von Zugmaschinen und Traktoren anzubauen und diese Lasten stattdessen als gezogene Anhänger zunehmend häufiger an Zugmaschinen und Traktoren anzuhängen. Die gezogenen Geräte erfordern demzufolge eigene Fahrwerke. Dieser Trend umfasst viele Geräte, und zwar in allen Arbeitsbreiten, nicht nur bei großen Geräten.

Es gibt nun Gerätekombinationen, d.h. i.d.R. gezogene Kombinationen, die in bestimmten Arbeitsbereichen im Feld sich aufschwingen können und dadurch die Arbeit im Feld sehr negativ beeinflussen können, bis hin zu einem Zustand, bei dem ein effektives Arbeiten stark behindert ist. Das Aufschwingen kann unter ungünstigen Umständen dazu führen, dass das Gerät während der Feldfahrt quasi über den Acker springt und eine wellige Oberfläche hinterlässt, was nachfolgende Arbeiten in gleichem Maße stören und behindern kann.

Von diesen Schwingungseffekten sind letztendlich alle Gerätekombinationen potentiell betroffen, unabhängig davon, ob es sich um Bodenbearbeitungsgeräte, Sämaschinen, oder sonstigen landwirtschaftlichen Geräten handelt. Auch treten die Effekte unabhängig davon auf, in welcher Anordnung verschiedene Geräteelemente, wie Scheiben, Zinken, Packer, Säelemente, Striegel etc... angeordnet sind.

Teilweise ist es möglich, dieses unerwünschte Eigenschwingverhalten dadurch zu beeinflussen, dass der Aufbau der Geräte verändert wird, beispielsweise werden Rahmen verlängert oder Gerätekomponenten so verändert, dass das Eigenschwingverhalten in Arbeit im Feld kein Problem mehr darstellt. Oft ist dies allerdings nicht sinnvoll möglich. Auch kann eine solche Modifikation der Geräte mit anderen Nachteilen verbunden sein, beispielsweise einer Beeinträchtigung der Arbeitsqualität aufgrund einer ungünstigeren Gewichtsverteilung und/oder Verschiebung des Schwerpunktes, was einer Lösung, das Aufschwingen zu verhindern, entgegenstehen kann.

Probleme mit Schwingungen gibt es nicht nur in Zusammenhang mit angehängten Geräten, sondern gleichermaßen bei Traktoren mit angebauten Geräten in Straßenfahrt oder beispielsweise bei Radladern, Baggern o. dgl. bei Straßenfahrt. Hier kommen dann des Öfteren Dämpfungssysteme zum Einsatz, teilweise sogar aktiv geregelt um das Aufschwingen zu unterbinden. Diese Dämpfungssysteme sind bekannt in beispielsweise Antriebsachsen der Traktoren, Unterlenkerhubwerken der Traktoren, Front- oder auch Radladerauslegern.

Aus der DE 33 46 892 A1 ist ein Fahrzeug mit einem gelenkig befestigten Anbaugerät bekannt, bei dem der nachteilige Einfluss von Nickschwingungen des Fahrzeugs auf das Anbaugerät reduziert werden soll. Das Anbaugerät ist über einen Kraftheber mit dem Fahrzeug verbunden. Zudem ist eine Regeleinrichtung vorgesehen, durch die sich im Zusammenwirken mit dem Kraftheber das Anbaugerät im Bereich seiner Aushubstellung gegenläufig zu den Schwingungen des Fahrzeugs während der Fahrt bewegt. Dies soll dadurch erreicht werden, dass die Relativbewegung zwischen Fahrzeug und Anbaugerät so erfolgt, dass das Anbaugerät in vertikaler Richtung räumlich annähernd ruhig gehalten wird. Mittels der Regeleinrichtung und des damit angesteuerten Krafthebers sollen Bewegungen des Anbaugeräts in Gegenphase zur Bewegung des Fahrzeugs erzeugt werden, wodurch Nickschwingungen des Fahrzeugs möglichst gering gehalten werden.

Die hierbei unverzichtbare Erfassung der Nickschwingungen und der Regeleinrichtung mitsamt der aktiven hydraulischen Ansteuerung des Krafthebers bedeutet einen relativ hohen konstruktiven Aufwand, der für viele Einsatzzwecke nicht notwendig erscheint.

Durch US-A 4 108 249 ist eine Bodenbearbeitungskombination, umfassend ein Zugfahrzeug und ein gezogenes landwirtschaftliches Bodenbearbeitungs- und/oder Sägerät, bekannt. Das gezogene landwirtschaftliche Bodenbearbeitungs- und/oder Sägerät weist wenigstens eine variabel höhenverstellbare Transportachse mit wenigstens zwei Laufrädern auf. Die Transportachse ist vermittels mindestens eines gelenkig am Rahmen angeordneten Auslegers um eine horizontale und quer zur Fahrtrichtung des Bodenbearbeitungsgeräts angeordnete Schwenkachse in ihrer Höhe verschwenkbar. Die Transportachse kann zwischen einer angehobenen Lage für die Feldfahrt und einer abgesenkten für die Straßen- oder Wendefahrt auf dem Acker verschwenkt werden. Zur Höhenverstellung ist ein hydraulischer Druckzylinder vorgesehen, der über einen unverdrehbar fest mit der Schwenkachse verbundenen ersten Arm auf die Schwenkachse einwirkt. Die Ausleger, welche die Transportachse tragen, sind ebenfalls unverdrehbar fest mit der Schwenkachse verbunden. Das gezogene landwirtschaftliche Bodenbearbeitungs- und/oder Sägerät weist darüber hinaus stoßabsorbierende Mittel auf, welche den Rahmen in gleichbleibender Höhe halten. Die stoßabsorbierenden Mittel umfassen eine Verbindung zwischen einer Zugdeichsel und der Schwenkachse. Diese Verbindung umfasst eine Druck-Zug-Stange, welche über einen Kniehebel mit einer Feder-Einheit verbunden ist. Der Kniehebel ist dabei zwischen dessen langem, erstem Kniehebelarm und dessen kürzerem, zweiten Kniehebelarm vermittels eines Gelenkzapfens schwenkbar an der Zugdeichsel befestigt. Die Feder-Einheit ist zwischen dem zweiten Kniehebelarm und dem Rahmen angeordnet. Die Druck-Zug-Stange ist zwischen dem ersten Kniehebelarm und einem unverdrehbar fest mit der Schwenkachse verbundenen zweiten Arm angeordnet. Damit wirken die stoßabsorbierenden Mittel zwischen dem Geräterahmen und dem Kniehebel, der vermittels der Druck-Zug-Stange via den zweiten Arm auf die Schwenkachse einwirkt, die wiederum mit den die Transportachse tragenden Auslegern verbunden ist. Bei dem gezogenen landwirtschaftlichen Bodenbearbeitungs- und/oder Sägerät ist vorgesehen, dass die Laufräder nie vollständig angehoben werden, sondern zur Tiefenregulierung stets mit dem Boden in Kontakt stehen. Sowohl der Hydraulikdruckzylinder, als auch die stoßabsorbierenden Mittel wirken über die ersten Arme bzw. über die zweiten Arme auf die Schwenkachse ein, an der die Ausleger angeordnet sind, an denen die die Laufräder tragende Transportachse drehbar gelagert ist. Dadurch kann die Schwenkachse beim Einsatz des Geräts zwischen den Auslegern und den axial zu den Auslegern versetzt angeordneten Armen und den Armen jeweils ungedämpfte Drehschwingungen ausführen, die eine unmittelbare, ungedämpfte Schwingung der Transportachse zur Folge haben.

Durch US-A 3 708 018 ist eine Bodenbearbeitungskombination, umfassend ein Zugfahrzeug und ein gezogenes landwirtschaftliches Bodenbearbeitungs- und/oder Sägerät, bekannt. Das gezogene landwirtschaftliche Bodenbearbeitungs- und/oder Sägerät weist wenigstens eine variabel höhenverstellbare Transportachse mit wenigstens zwei Laufrädern. Die Transportachse wird von einem Ausleger getragen, der an einer horizontal und quer zur Fahrtrichtung des Bodenbearbeitungsgeräts angeordneten, gegenüber dem Rahmen schwenkbar gelagerten Schwenkachse unverdrehbar fest angeordnet ist. An der Schwenkachse sind zudem in Richtung der Erstreckung der Schwenkachse axial zueinander und zu dem Ausleger versetzt ein erster Arm und ein zweiter Arm unverdrehbar und fest angeordnet. Darüber hinaus sind der Ausleger, der erste Arm und der zweite Arm in ihren Winkelpositionen um die Schwenkachse herum zueinander verdreht an der Schwenkachse angeordnet. Zwischen dem Rahmen und dem ersten Arm ist eine Hebevorrichtung vorgesehen, um den Rahmen anzuheben und abzusenken. Die Hebevorrichtung umfasst hierzu einen Hydraulikzylinder, der über den ersten Arm auf die Schwenkachse einwirkt. Zwischen dem Rahmen und dem zweiten Arm ist eine Nivelliervorrichtung angeordnet. Die Nivelliervorrichtung umfasst ein Federglied. Auch hier kann die Schwenkachse beim Einsatz des Geräts zwischen dem Ausleger und den axial zu dem Ausleger versetzt angeordneten Armen jeweils ungedämpfte Drehschwingungen ausführen, die eine unmittelbare, ungedämpfte Schwingung der Transportachse zur Folge haben.

Das vorrangig zu erreichende Ziel der vorliegenden Erfindung wird daher darin gesehen, eine möglichst einfach aufgebaute und damit sehr kostengünstig realisierbare Schwingungsreduzierung für angehängte Bodenbearbeitungsgeräte, Bodenbearbeitungskombinationen und/oder Sägeräte zu ermöglichen und zu liefern.

Dieses Ziel der Erfindung wird mit dem Gegenstand des unabhängigen Anspruchs 1 erreicht. Merkmale vorteilhafter Weiterbildungen der Erfindung ergeben sich aus den abhängigen Ansprüchen.

Die vorliegende Erfindung bezieht sich in erster Linie auf gezogene landwirtschaftliche Geräte mit eigener Transportachse, die bspw. zur Bodenbearbeitung und/oder Saat verwendet werden. Die Transportachse dient dabei lediglich dem Transport des Gerätes auf der Straße und/oder dem Wenden des Gerätes am Feldrand oder am Ende einer Spur. Während des Einsatzes des Geräts auf dem Feld werden diese Transportachsen eingezogen und berühren den Boden nicht, oder nur ganz leicht. Bei der vorliegenden Erfindung geht es darum, das Aufschwingen bei gezogenen, an Traktoren angehängten Geräten dadurch zu verhindern, dass die Transportachse dieser Geräte, die bei der Arbeit im Feld nicht im Einsatz, also hochgehoben ist, derart gefedert und/oder gedämpft ist, dass diese ausgehobene Transportachse entgegen dem Eigenschwingverhalten des Gerätes wirkt, quasi im hochgehobenen Zustand beim Aufschwingen des Gerätes selbst zu schwingen beginnt und so das Gesamtgerät stabilisiert. Es schwingt quasi automatisch entgegen der Schwingung des Restgerätes und gleicht diese komplett aus.

Mit dieser sehr einfachen Federung und/oder Dämpfung der angehoben Transportachse wird auf effektive Weise das Aufschwingen des Gesamtgerätes in Arbeit verhindert, ohne dass dabei der grundsätzlichen Aufbau der Maschine geändert werden muss. Die Dämpfung der Transportachse erfolgt also in erster Linie in angehobener Stellung in Arbeit im Feld und wird in Straßenfahrt nicht benötigt.

Die erfindungsgemäße Bodenbearbeitungskombination umfasst vorzugsweise zumindest ein Zugfahrzeug und ein gezogenes landwirtschaftliches Bodenbearbeitungs- und/oder Sägerät, das wenigstens eine variabel höhenverstellbare Transportachse mit wenigstens zwei Laufrädern aufweist, die über wenigstens ein Gelenk mit einem Geräterahmen verbunden ist. Es ist wenigstens eine zwischen Geräterahmen und höhenverstellbare Transportachse angeordnete Dämpfungseinrichtung vorgesehen. Zudem sieht die Erfindung vor, dass die Transportachse einen Schwingungstilger bildet, der ein Aufschaukeln und eine Resonanzschwingung zumindest des gezogenen Gerätes vermeidet.

Das zu dämpfende Gerät kann grundsätzlich ein beliebiges gezogenes landwirtschaftliches Bodenbearbeitungs- und/oder Sägerät mit eigenem Fahrwerk bzw. verstellbarer Transportachse sein, die in Arbeit im Feld angehoben und mit einem Dämpfungssystem ausgestattet ist und so in Arbeit frei beweglich schwingen kann.

Wahlweise kann die Dämpfung der Transportachse mittels eines hydraulischen Druckspeichers im hydraulisch betätigbaren Aushubmechanismus der Transportachse erfolgen. Alternativ ist es möglich, dass die Dämpfung der Transportachse mittels eines beliebigen Dämpfungselementes erfolgen kann, beispielsweise pneumatisch, mechanisch, oder durch elastische Elemente, insbesondere mittels gummiartiger Elemente. Die Dämpfungscharakteristik der Dämpfung kann zudem wahlweise einstellbar sein, um die Geräteauslegung universell verwendbar zu machen.

Vorzugsweise wirkt die Dämpfung der Transportachse in beide Bewegungsrichtungen der Transportachse, d.h. bei einem Schwingen sowohl nach oben als auch nach unten, wodurch die gewünschte Funktion der um eine horizontale, quer zur Fahrtrichtung liegende Schwenkachse gedämpft beweglichen Transportachse als Schwingungstilger in optimaler Weise zu erfüllen ist. In einer einfacheren Variante kann die Dämpfung der Transportachse wahlweise auch nur in eine Richtung, nach oben oder unten wirken. Typischerweise kann die Transportachse am Ende des Gerätes positioniert sein. Grundsätzlich kann die Transportachse jedoch auch beliebig innerhalb des Gerätes zwischen verschiedenen Geräteelementen positioniert sein. Die Transportachse kann einachsig, mehrachsig oder auch als Tandemachse ausgebildet sein.

Die Erfindung wird nachfolgend anhand eines Ausführungsbeispiels unter Bezugnahme auf die beiliegende Zeichnung näher erläutert. Dabei zeigen:
Fig. 1 eine schematische Perspektivdarstellung eines gezogenen Bodenbearbeitungsgeräts am Beispiel einer Kurzscheibenegge mit angehobener hinterer Achse für eine Feldfahrt;
Fig. 2 eine schematische Perspektivdarstellung eines gezogenen Bodenbearbeitungsgeräts am Beispiel einer Zinkengrubbers mit abgesenkter hinterer Achse für Straßen- oder Wendefahrt;
Fig. 3 eine schematische Seitenansicht der Kurzscheibenegge gemäß Fig. 1 in Transportstellung mit abgesenkter Achse, und
Fig. 4 eine schematische Seitenansicht des Geräts in Arbeitsstellung mit angehobener Achse.

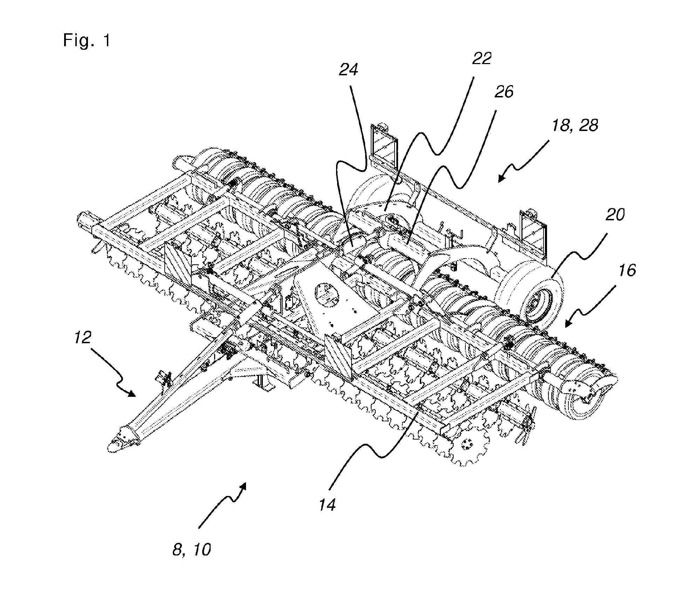

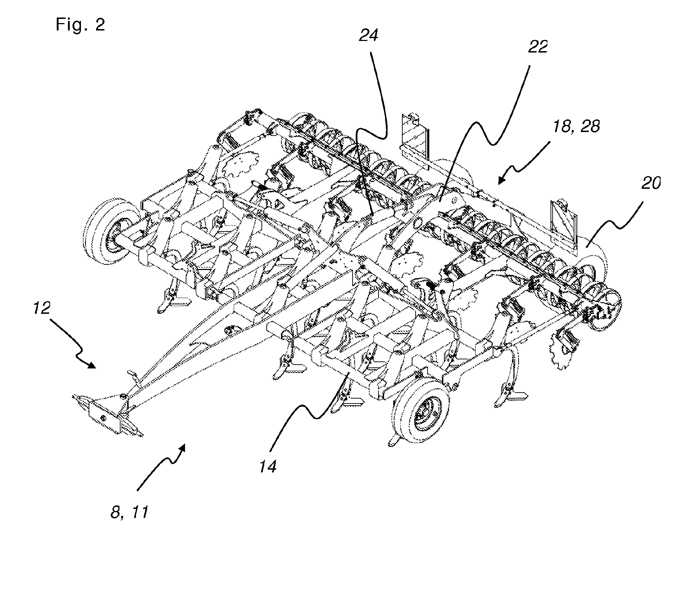

Die schematische Perspektivdarstellung der Fig. 1 zeigt eine mehrreihige Kurzscheibenegge 10 als Ausführungsbeispiel eines gezogenen Bodenbearbeitungsgeräts 8. Die in Fig. 1 gezeigte Kurzscheibenegge 10 weist eine vordere Zugdeichsel 12 zum Anhängen an eine hier nicht dargestellte landwirtschaftliche Zugmaschine bzw. einen Traktor sowie einen sich daran anschließenden Rahmen 14 zur Aufnahme der Scheibeneggen sowie optionaler Reifenpacker 16 o. dgl. Geräte auf. An einem geeigneten Rahmenabschnitt ist eine Transportachse 18 mit zwei Tragrädern 20 gelenkig aufgehängt. Die Transportachse 18 ist um eine horizontale und quer zur Fahrtrichtung des Bodenbearbeitungsgeräts 8 angeordnete Schwenkachse in ihrer Höhe verschwenkbar. Zu diesem Zweck umgreifen bogenförmige Ausleger 22 der Transportachse 18 das Heck des Geräts 8 mit den heckseitig angeordneten Reifenpackern 16. Die Ausleger 22 sind gelenkig am Rahmen 14 angeordnet, so dass die Transportachse 18 zwischen einer angehobenen Lage (vgl. Fig. 1) für die Feldfahrt und einer abgesenkten Lage (vgl. Fig. 2) für die Straßen- oder Wendefahrt auf dem Acker verschwenkt werden kann. Dieses Heben und Senken zwischen den beiden Endlagen der Transportachse 18 erfolgt mittels eines Hubzylinders 24, der zwischen Rahmen 14 des Geräts 8 und einer zwischen den Auslegern 22 angeordneten Querstrebe 26 angelenkt ist. Sowohl bei angehobener hinterer Achse 18 für die Feldfahrt als auch bei abgesenkter Achse 18 für die Straßenfahrt erlaubt der Hubzylinder 24 erfindungsgemäß eine gedämpfte schwingende Bewegung der Ausleger 22 mitsamt der Transportachse 18 und der daran gelagerten Tragräder 20, so dass dieser bewegliche Teil des Geräts 8 als gedämpft schwingendes System und damit als Schwingungstilger 28 fungiert, der Resonanzschwingungen des Geräts 8 wirksam unterdrücken oder zumindest stark dämpfen kann.

Die schematische Perspektivdarstellung der Fig. 2 zeigt eine leicht modifizierte Anordnung der Gerätekombination bzw. des gezogenen Bodenbearbeitungsgeräts 8 am Beispiel eines Zinkengrubber 11 mit abgesenkter hinterer Transportachse 18 für eine Straßen- oder Wendefahrt. Bei dieser Variante ist nur ein mittiger, gegabelter Ausleger 22 vorgesehen, der über einen Hubzylinder 24 am Rahmen 14 des Zinkengrubbers 11 angelenkt ist. Das Heben und Senken erfolgt in gleicher Weise wie zuvor anhand Fig. 1 beschrieben, ebenso die dämpfende Wirkung des Hubzylinders 24, um die um eine horizontale Achse bewegliche Transportachse 18 als Schwingungstilger einzusetzen.

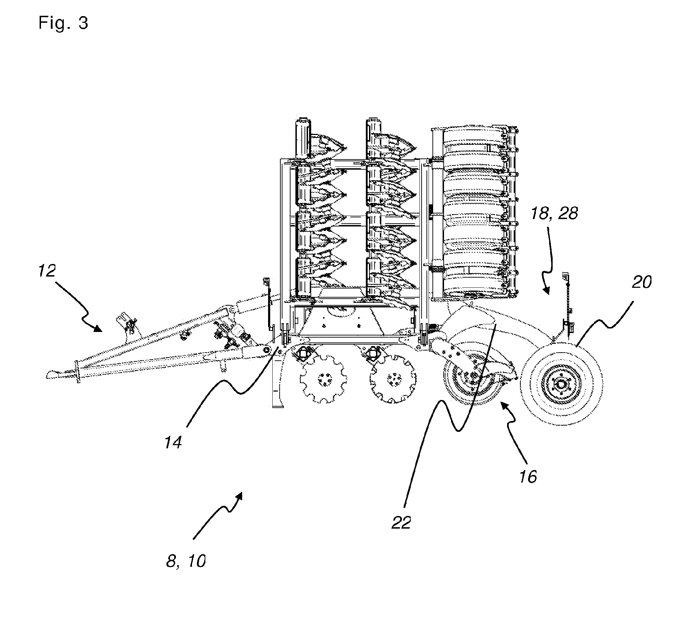

Die schematische Seitenansicht der Fig. 3 verdeutlicht nochmals das Gerät 8 gemäß Fig. 1 in Transportstellung mit abgesenkter Achse 18. Teile des Rahmens 14 mitsamt daran angeordneter Scheiben sind hierbei zur Verringerung der Gerätebreite um 90 Grad nach oben geschwenkt und für die Straßenfahrt in dieser Lage fixiert.

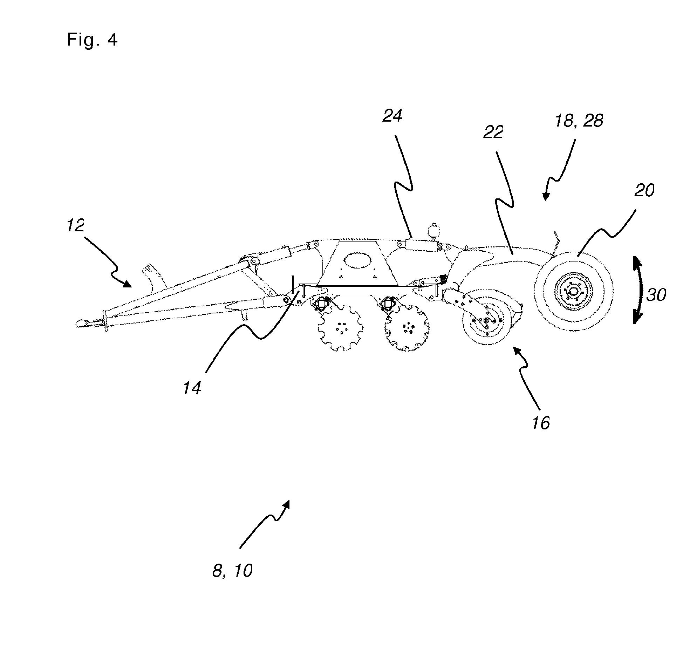

Die schematische Seitenansicht der Fig. 4 zeigt das Gerät gemäß Fig. 1 in Arbeitsstellung mit angehobener Achse und aktiviertem Schwingungstilger 28. Zumindest in diesem Betriebszustand erlaubt der Hubzylinder 24 ein definiertes Bewegen und Schwingen der Transportachse 18, wobei hier die Dämpfungswirkung so einzustellen ist, dass die Achse 18 bzw. die Räder 20 auch bei voller Auslenkung nicht zu stark auf den Boden treffen, sondern diesen allenfalls leicht oder gar nicht berühren. Die Schwingungsmöglichkeit des Schwingungstilgers 28 ist durch den Doppelpfeil 30 in Fig. 4 angedeutet.

Darüber hinaus kann auch bei der Transportfahrt gemäß Fig. 3 eine leichte Bewegung der Transportachse 18 zugelassen werden, die aber typischerweise deutlich stärker gedämpft sein muss als bei Feldfahrt, um ein Durchschwingen der Bodenbearbeitungsgeräte wie Scheiben und/oder Zinken auf die Straßenoberfläche zu verhindern. Dennoch kann auch durch einen straff gedämpften Hubzylinder 24 eine dämpfende Wirkung erreicht werden, so dass auch bei Straßenfahrt die Entstehung von Resonanzschwingungen unterdrückt werden kann. Wahlweise kann es ausreichen, wenn die Dämpfungswirkung in nur eine Bewegungsrichtung vorhanden ist, so dass bspw. das Ausfedern der Transportachse 18 nach unten gedämpft ist, während das Hochfedern nach oben ungedämpft sein kann und bspw. nur durch einen gefederten mechanischen Anschlag gebremst wird.

Vorzugsweise kann die Dämpfungscharakteristik des Hubzylinders 24 für alle Arten von unterschiedlichen Geräten 8 voreingestellt und/oder für den Betrieb variabel verstellbar sein.

## Patentansprüche

1. Bodenbearbeitungskombination, umfassend zumindest ein Zugfahrzeug und ein gezogenes landwirtschaftliches Bodenbearbeitungs- und/oder Sägerät (8, 10, 11), das wenigstens eine variabel höhenverstellbare Transportachse (18) mit wenigstens zwei Laufrädern (20) aufweist, die über wenigstens ein Gelenk mit einem Geräterahmen (14) verbunden ist, wobei die Transportachse (18) vermittels gelenkig am Rahmen (14) angeordneter Ausleger (22) um eine horizontale und quer zur Fahrtrichtung des Bodenbearbeitungsgeräts (8) angeordnete Schwenkachse in ihrer Höhe verschwenkbar ist, so dass die Transportachse (18) zwischen einer angehobenen Lage für die Feldfahrt und einer abgesenkten für die Straßen- oder Wendefahrt auf dem Acker verschwenkt werden kann, wobei dieses Heben und Senken zwischen den beiden Endlagen der Transportachse (18) mittels eines zwischen Rahmen (14) des Geräts (8) an einer zwischen den Auslegern (22) angeordneten Querstrebe (26) angelenkten Hubzylinders (24) erfolgt, wobei wenigstens eine zwischen Geräterahmen (14) und höhenverstellbarer Transportachse (18) angeordnete Dämpfungseinrichtung vorgesehen ist, **dadurch gekennzeichnet, dass** die Transportachse (18) während des Einsatzes des Geräts (8, 10, 11) eingezogen ist und einen Schwingungstilger (28) bildet, der entgegen der Schwingung des Restgerätes schwingt und diese ausgleicht.

2. Bodenbearbeitungskombination nach Anspruch 1, bei der die Dämpfung der Transportachse (18) mittels eines hydraulischen Druckspeichers (24) im hydraulischen Aushubmechanismus der Transportachse (18) erfolgt.

3. Bodenbearbeitungskombination nach Anspruch 1, bei der die Dämpfung der Transportachse (18) mittels eines beliebigen Dämpfungselementes erfolgen kann, beispielsweise pneumatisch, mechanisch, oder durch elastische oder gummielastische Elemente.

4. Bodenbearbeitungskombination nach einem der Ansprüche 1 bis 3, bei der die Dämpfungscharakteristik einstellbar ist.

5. Bodenbearbeitungskombination nach einem der Ansprüche 1 bis 4, bei der die Dämpfung der Transportachse (18) in beide Richtung, nach oben und unten wirkt.

6. Bodenbearbeitungskombination nach einem der Ansprüche 1 bis 4, bei der die Dämpfung der Transportachse (18) nur in eine Richtung, nach oben oder unten wirkt.

7. Bodenbearbeitungskombination nach einem der Ansprüche 1 bis 6, bei der die Transportachse (18) am hinteren Ende des gezogenen Gerätes (8) positioniert ist.

8. Bodenbearbeitungskombination nach einem der Ansprüche 1 bis 6, bei der die Transportachse (18) beliebig innerhalb des Gerätes (8) zwischen verschiedenen Geräteelementen positioniert ist.

9. Bodenbearbeitungskombination nach einem der Ansprüche 1 bis 8, bei der die Transportachse (18) einachsig, mehrachsig oder auch als Tandemachse ausgebildet sein kann.

10. Angehängtes Bodenbearbeitungs- und/oder Sägerät (8), das ein an einer Zugmaschine oder einem Zugfahrzeug anhängbares Teil einer Bodenbearbeitungskombination gemäß einem der Ansprüche 1 bis 9 ist.

## Claims

1. A tilling combination comprising at least one towing vehicle and one towed agricultural tilling implement and/or sowing implement (8, 10,11), which has at least one variably height-adjustable transport axis (18) with at least two running wheels (20), which transport axis (18) is connected to an implement frame (14) by at least one joint, wherein the transport axis (18) is pivotal with regard to its height about a horizontal swivel axis arranged transversely to the driving direction of the tilling implement (8) by means of cantilevers (22), which are articulately jointed to the frame (14), so that the transport axis (18) can be pivoted between a raised position for driving on the field and a lowered position for driving on the road or for turning on the field, wherein this process of raising and lowering between the two stop positions of the transport axis (18) is performed by means of a lift cylinder (24) hinged between the frame (14) of the implement (8) and a cross member (26), which is arranged between the cantilevers (22), wherein at least one damping device is provided, which is arranged between the implement frame (14) and the height-adjustable transport axis (18), **characterised in that** the transport axis (18) is retracted during operation of the implement (8, 10, 11) and forms a tuned mass damper (28), which vibrates contrary to the vibration of the remainder of the implement and equalises this vibration.

2. The tilling combination as recited in claim 1 wherein the damping of the transport axis (18) is performed by means of a hydraulic pressure accumulator (24) in the hydraulic lifting mechanism of the transport axis (18).

3. The tilling combination as recited in claim 1 wherein the damping of the transport axis (18) can be performed by means of any type of damping element, for instance pneumatically, mechanically, or by means of elastic or rubber elastic elements.

4. The tilling combination as recited in one of the claims 1 to 3 wherein the damping characteristic is adjustable.

5. The tilling combination as recited in one of the claims 1 to 4 wherein the damping of the transport axis (18) acts in both directions, upward and downward.

6. The tilling combination as recited in one of the claims 1 to 4 wherein the damping of the transport axis (18) acts only in one direction, upward or downward.

7. The tilling combination as recited in one of the claims 1 to 6 wherein the transport axis (18) is positioned at the rear end of the towed implement (8).

8. The tilling combination as recited in one of the claims 1 to 6 wherein the transport axis (18) is positioned anywhere within the implement (8) between various implement elements.

9. The tilling combination as recited in one of the claims 1 to 8 wherein the transport axis (18) can be formed as a single-axis, multi-axis or also as a tandem-axis device.

10. A connected tilling implement and/or sowing implement (8) being connectable to a towing machine or a towing vehicle as a part of a tilling combination according to one of the claims 1 to 9.

## Revendications

1. Combinaison à travailler le sol, comprenant au moins un véhicule de traction et un engin agricole tracté à travailler le sol et/ou à semer (8, 10, 11) qui présente au moins un essieu de transport (18) à réglage en hauteur variable ayant au moins deux roues de roulement (20) qui sont reliées par au moins une articulation à un châssis d'engin (14), ledit essieu de transport (18) étant apte à pivoter en hauteur, par l'intermédiaire de flèches (22) articulées sur ledit châssis (14), autour d'un axe de pivotement horizontal disposé transversalement à la direction de marche de l'engin à travailler le sol (8), de sorte que ledit essieu de transport (18) peut pivoter entre une position soulevée pour la conduite dans les champs et une position abaissée pour la conduite sur la route ou virer dans le champ, cette montée et descente entre les deux positions extrêmes de l'essieu de transport (18) étant réalisée au moyen d'un vérin de levage (24) qui est articulé entre le châssis (14) de l'engin (8) et une entretoise transversale (26) disposée entre lesdites flèches (22), au moins un dispositif d'amortissement disposé entre le châssis d'engin (14) et ledit essieu de transport (18) réglable en hauteur étant prévu, **caractérisée par le fait que** ledit essieu de transport (18) est rétracté durant l'utilisation de l'engin (8, 10, 11) et forme un amortisseur de vibrations (28) qui vibre à l'encontre de la vibration du reste de l'engin et compense celle-ci.

2. Combinaison à travailler le sol selon la revendication 1, dans laquelle l'amortissement de l'essieu de transport (18) se fait au moyen d'un accumulateur de pression hydraulique (24) dans le mécanisme de soulèvement hydraulique de l'essieu de transport (18).

3. Combinaison à travailler le sol selon la revendication 1, dans laquelle l'amortissement de l'essieu de transport (18) peut se faire au moyen de n'importe quel élément amortisseur, par exemple pneumatique, mécanique, ou par des éléments élastiques ou élastiques comme le caoutchouc.

4. Combinaison à travailler le sol selon l'une quelconque des revendications 1 à 3, dans laquelle la caractéristique d'amortissement est réglable.

5. Combinaison à travailler le sol selon l'une quelconque des revendications 1 à 4, dans laquelle l'amortissement de l'essieu de transport (18) agit dans les deux directions, vers le haut et vers le bas.

6. Combinaison à travailler le sol selon l'une quelconque des revendications 1 à 4, dans laquelle l'amortissement dudit essieu de transport (18) n'agit que dans une direction, vers le haut ou vers le bas.

7. Combinaison à travailler le sol selon l'une quelconque des revendications 1 à 6, dans laquelle ledit essieu de transport (18) est positionné à l'extrémité arrière de l'engin (8) tracté.

8. Combinaison à travailler le sol selon l'une quelconque des revendications 1 à 6, dans laquelle ledit essieu de transport (18) est positionné de manière quelconque à l'intérieur de l'engin (8) entre des éléments différents de l'engin.

9. Combinaison à travailler le sol selon l'une quelconque des revendications 1 à 8, dans laquelle ledit essieu de transport (18) peut être réalisé comme essieu simple, essieux multiples ou aussi comme essieu tandem.

10. Engin à travailler le sol et/ou à semer (8) traîné qui est une partie d'une combinaison à travailler le sol selon l'une quelconque des revendications 1 à 9, partie apte à être accrochée à un engin de traction ou à un véhicule de traction.
